# EUROPÄISCHE PATENTSCHRIFT

(11) **EP 0 451 583 B1**
(45) Veröffentlichungstag und Bekanntmachung des Hinweises auf die Patenterteilung: **03.05.1995**
(21) Anmeldenummer: 91104598.7
(22) Anmeldetag: 23.03.1991
(51) Int. Cl.: B60J 7/08

(54) **Fahrzeugdach, insbesondere für Schwerkraftfahrzeuge, Busse o.dgl.**
Vehicle roof, especially for lorries or busses or the like
Toit de véhicule, notamment pour poids lourds ou autobus ou analogues

(30) Priorität: 12.04.1990 DE 4011903
(43) Veröffentlichungstag der Anmeldung: 16.10.1991
(73) Patentinhaber: Webasto AG Fahrzeugtechnik, D-82131 Stockdorf (DE)
(72) Erfinder: Poppele, Gerhard, W-8000 München (DE); Prem, Bernhard, W-8000 München 70 (DE)
(74) Vertreter: Wiese, Gerhard

(56) Entgegenhaltungen:
- EP-A- 0 308 849
- EP-A- 0 325 380
- DE-A- 2 341 203
- DE-A- 3 835 018
- GB-A- 2 105 659
- US-A- 4 754 695

## Beschreibung

Die Erfindung befaßt sich mit einem Fahrzeugdach, das insbesondere für Schwerkraftfahrzeuge, Busse o.dgl. zur Be- und Entlüftung oder auch als Notausstiegsluke bestimmt ist. Ein solches Fahrzeugdach hat eine in einer festen Dachfläche vorgesehene Dachöffnung, die mittels eines Deckels verschließbar ist, der um zwei quer zur Fahrzeuglängsachse verlaufende Achsen über eine Schwenklagerung und eine einen Ausstellhebel aufweisende Ausstelleinrichtung bezüglich eines in die Dachöffnung eingesetzten Rahmens ausstellbar ist, und es ist eine Betätigungseinrichtung für die Ausstellung des Deckels vorgesehen.

Aus DE-A-3 835 018 vom 14. Oktober 1988 ist ein Fahrzeugdach der obengenannten Art entnehmbar. Hierbei ist jeder Schwenklagerung eine gesonderte Ausstelleinrichtung zugeordnet, welche Bedienungshebel umfaßt, die vom Fahrzeuginnenraum her betätigbar sind. Je nach der gewünschten Ausstellstellung muß dann der eine oder in der vollständig ausgestellten Stellung müssen beide Bedienungshebel von innen betätigt werden. Die gesamte Betätigungskraft muß hierbei von Hand aufgebracht werden. Auf Grund der Mehrzahl von Bedienungshebeln und der ausschließlichen Handbetätigung ist ein solches Fahrzeugdach mit einem ausstellbaren Deckel wenig bedienungsfreundlich. Ferner ist die Ausstelleinrichtung an mehreren Stellen mit dem Deckel und dem Rahmen verbunden, der in die Dachöffnung in der festen Dachfläche eingesetzt ist. Daher müssen der Rahmen und der Deckel mit der Ausstelleinrichtung als Einheit montiert werden.

Die Erfindung zielt daher darauf ab, unter Überwindung der zuvor geschilderten Schwierigkeiten ein Fahrzeugdach, das insbesondere für Schwerkraftfahrzeuge, Busse o.dgl. bestimmt ist, bereitzustellen, das einen verbesserten Bedienungskomfort hat und einen vereinfachten Einbau gestattet.

Nach der Erfindung zeichnet sich ein Fahrzeugdach, insbesondere für Schwerkraftfahrzeuge, Busse o.dgl., mit einer in einer festen Dachfläche vorgesehenen Dachöffnung, die mittels eines Deckels verschließbar ist, der um zwei quer zur Fahrzeuglängsachse verlaufende Achsen über eine Schwenklagerung und eine einen Ausstellhebel aufweisende Ausstelleinrichtung bezüglich eines in die Dachöffnung eingesetzten Rahmens ausstellbar ist, und mit einer Betätigungseinrichtung zum Ausstellen des Deckels dadurch aus, daß die Betätigungseinrichtung ein zentral am Deckel angeordnetes, um seine Achse drehbares Steuerorgan für alle Ausstellungen des Deckels aufweist, welches die Ausstelleinrichtung, die am Deckel gelagert ist, beaufschlagt, und daß die Ausstellhebel der Ausstelleinrichtung nur an ihren Enden mit dem Rahmen verbunden sind.

Die Betätigungseinrichtung des erfindungsgemäßen Fahrzeugdachs weist ein drehbares Steuerorgan auf, das gemeinsam für alle Ausstellbewegungen des Deckels vorgesehen ist, und das beide Ausstelleinrichtungen an den beiden Schwenklagerungen beaufschlagt. Hierdurch vereinfacht sich die Bedienung bei der Ausstellung des Deckels wesentlich und man erhält einen verbesserten Bedienungskomfort. Ferner ist das zentrale Steuerorgan drehbar am Deckel gelagert, so daß das Steuerorgan und der Deckel eine vom Rahmen unabhängige Einheit bilden. Ferner sind die Ausstellhebel lediglich an ihren Enden im Bereich der Schwenklagerung mit dem Rahmen verbunden, so daß der Rahmen zur vereinfachten Montage unabhängig von dem Deckel der Betätigungseinrichtung gesondert montiert werden kann. Die Einheit mit der Betätigungseinrichtung und dem Steuerorgan zusammen mit dem Deckel kann ebenfalls für sich gesondert vormontiert und dann nach der Montage des Rahmens eingebaut werden, wobei die Ausstellhebel an ihren Enden über die Schwenklagerung mit dem Rahmen verbunden werden. Hierdurch ergibt sich somit auch eine wesentlich vereinfachte Montage eines solchen Fahrzeugdachs.

Vorzugsweise ist jedem Ausstellhebel der Ausstelleinrichtung ein an einer Schiene am Deckel gleitbeweglich geführter Schieber zugeordnet, welcher den oder die Ausstellhebel zum Bewegen in die jeweilige Ausstellstellung beaufschlagt. Durch die Führungsschiene an dem Deckel wird dieser zur besseren Deckelstabilität ausgesteift. Ferner ermöglichen die Schieber eine gleichmäßige und aufgrund der Hebelverhältnisse weniger kraftaufwendige Ausstellung des Deckels, so daß dieser stufenlos ausgestellt werden kann. Hierbei ist jeder Ausstellhebel mit dem jeweiligen, zugeordneten Schieber gelenkig verbunden, so daß der Ausstellhebel entsprechend der Verfahrbewegung des Schiebers um die Gelenkverbindung mit dem Schieber in gewünschter Weise geschwenkt wird, und hierdurch der Deckel um die Schwenklagerungen am Rahmen zur Ausführung der Ausstellbewegung verschwenkt wird.

Vorzugsweise wird das zentrale Steuerorgan von einer Steuerscheibe gebildet, in der die Ausstellbewegungen des Deckels bestimmende, kurvenförmig verlaufende Steuernuten ausgebildet sind, in die je ein Nachlaufglied eingreift, das starr mit dem dem jeweiligen Ausstellhebel zugeordneten Schieber bewegungsverbunden ist. Das Nachlaufglied kann hierbei in Form eines Stiftes ausgebildet werden, und es dient als Schubstange, die mit dem jeweiligen Schieber bewegungsverbunden ist. Die den jeweiligen Schiebern und den Nachlaufgliedern zugeordneten Steuernuten in der zentralen Steuerscheibe sind vorzugsweise komplementär ausgelegt und haben einen kreuzungsfreien Verlauf, so daß jeder Schieber einen eindeutigen Bewegungsablauf hat. Die Steuernut für den jeweiligen Schieber wird so gewählt, daß der Deckel jeweils gewünschte Ausstellstellungen einnehmen kann. Ferner haben die Steuernuten vorzugsweise einen solchen Steigungswinkel, daß man eine Selbsthemmung der kompletten Mechanik erreicht, so daß der Deckel in der jeweiligen Ausstellage stabilisiert wird. Hierdurch können zusätzliche Rasteinrichtungen o.dgl. entfallen.

Vorzugsweise ist mit dem zentralen Steuerorgan ein Drehbedienungselement verbunden, das von der Deckelinnenseite aus einhändig zur Einstellung der entsprechend gewünschten Deckelstellung verdrehbar ist. Bei dieser Ausbildungsform werden der Öffnungs- und Schließvorgang des Deckels lediglich durch Handkraft unterstützt vorgenommen.

Alternativ ist durch die zentrale Anordnung des Steuerorgans am Deckel auch eine Motorbetätigung möglich, wozu beispielsweise ein elektrischer Antriebsmotor im Deckel vorgesehen sein kann, welcher über eine Zahnradverbindung die zentrale Steuerscheibe um ihre Achse dreht.

Bei allen Ausbildungsformen des Fahrzeugdachs ist die Auslegung derart getroffen, daß während einer vollständigen Umdrehung des Steuerorgans der Deckel in alle seine Ausstellstellungen gebracht werden kann. Die jeweils gewünschten Ausstellstellungen hängen von der Drehrichtung und von dem Drehwinkel des zentralen Steuerorgans ab.

Gemäß einer bevorzugten Ausbildungsform können Anschläge vorgesehen sein, welche die Schieber in den bevorzugten Stellungen des Deckels arretieren, wobei insbesondere den Endstellungen der Ausstelleinrichtung jeweils Anschläge zugeordnet sind. Diese Anschläge sind zweckmäßigerweise am Schieber selbst in der Nähe der Gelenkverbindung mit dem jeweiligen Ausstellhebel ausgebildet, so daß in den gewünschten, bevorzugten Stellungen des Deckels der Ausstellhebel gegen entsprechende Anschlagflächen am Schieber anliegt.

Die Erfindung wird nachstehend anhand von bevorzugten Ausführungsformen unter Bezugnahme auf die beigefügte Zeichnung näher erläutert. Darin zeigt:
- Fig. 1: eine schematische perspektivische Ansicht einer ersten Ausführungsform eines Fahrzeugdachs nach der Erfindung,
- Fig. 2a und 2b: Ausbildungsformen von Anschlägen für bevorzugte Ausstellstellungen des Deckels,
- Fig. 3: eine perspektivische Ansicht des Fahrzeugdaches vom Fahrzeuginnenraum aus gesehen, und
- Fig. 4: eine zweite bevorzugte Ausführungsform eines Fahrzeugdachs nach der Erfindung in perspektivischer Darstellung und mit elektromotorischem Antrieb.

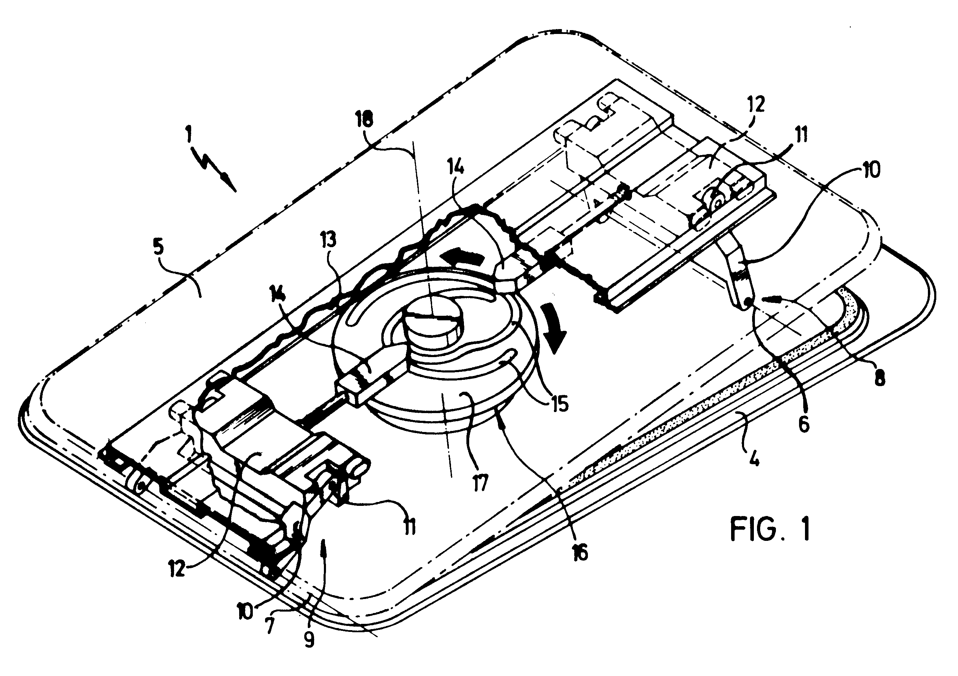

Bei der in Fig. 1 gezeigten Ausführungsform des erfindungsgemäßen Fahrzeugdachs, das insgesamt mit 1 bezeichnet ist, handelt es sich um die mechanische Ausführungsvariante, bei der die Ausstellbewegungen ausschließlich mittels Handbetätigung ausgeführt werden.

In einer festen Dachfläche 2 eines nicht näher dargestellten Schwerkraftfahrzeuges, eines Busses o.dgl., ist eine Dachöffnung 3 vorgesehen, in die ein Rahmen 4 eingesetzt ist. Ein starrer Deckel 5 ist über zwei, quer zur Fahrzeuglängsachse verlaufende Achsen 6, 7 über eine Schwenklagerung 8, 9 mit dem Rahmen 4 derart verbunden, daß der Deckel 5 jeweils einseitig ausgestellt oder auch beidseitig so ausgestellt werden kann, daß die vom Deckel 5 gebildete Ebene etwa parallel zur festen Dachfläche 2 verläuft und nach oben ausgestellt ist.

Da die beiden Schwenklagerungen 8, 9 übereinstimmend ausgelegt sind, wird nachstehend nur die eine Schwenklagerung 8 näher erläutert. Die Schwenklagerung 8 hat einen Ausstellhebel 10, der nur an einem Ende um die Achse 6 am Rahmen 4 schwenkbar mit diesem verbunden ist. Das andere Ende des Ausstellhebels 10 ist über ein Gelenk 11 mit einem Schieber 12 verbunden, welcher in einer in Längsrichtung des Deckels 5 verlaufenden Schiene 13 unter Ausführung einer linearen Bewegung verschiebbar ist. Der schlittenähnliche Schieber 12 ist starr mit einem als Schubstange ausgebildeten Nachlaufglied 14 verbunden, das beispielsweise an seiner Kopfseite einen Stift trägt, welcher in eine Steuernut 15 eines zentralen Steuerorgans 16 eingreift. Das zentrale Steuerorgan 16 ist in Form einer Steuerscheibe 17 ausgelegt, die um ihre Achse 18 drehbar am Deckel 5 gelagert ist.

Wie aus Fig. 1 zu ersehen ist, sind die den jeweiliegen Schiebern 12 zugeordneten Steuernuten 15 hinsichtlich des Verlaufs komplementär ausgelegt. Die Steuernuten 15 sind hierbei derart beschaffen, daß über die Schieber 12 der Ausstellhebel 10 der jeweiligen Ausstelleinrichtung derart beaufschlagt wird, daß der Deckel 5 in die jeweils gewünschte Ausstellstellung gebracht werden kann. Ferner kann der Steigungswinkel der Steuernut 15 derart gewählt werden, daß eine Selbsthemmung der gesamten Bewegungsmechanik in jeder Lage erreicht werden kann. Hierdurch wird der Deckel 5 in der jeweils gewünschten und eingestellten Lage stabil gehalten.

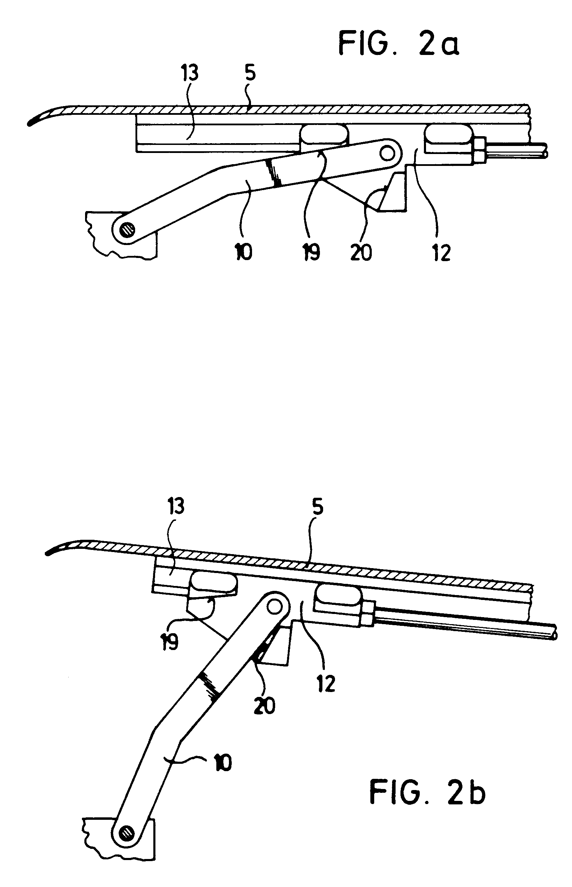

Wie aus den Fig. 2a und 2b zu ersehen ist, sind an dem Schieber 12 Anschläge 19, 20 vorgesehen und ausgebildet, gegen welche der Ausstellhebel 10 beispielsweise in der Schließstellung oder der vollständig ausgestellten Stellung zur Anlage kommt, so daß der Deckel 5 in diesen bevorzugten Endstellungen zusätzlich noch mit mechanischen Mitteln mit Hilfe der Anschläge 19, 20 arretiert wird.

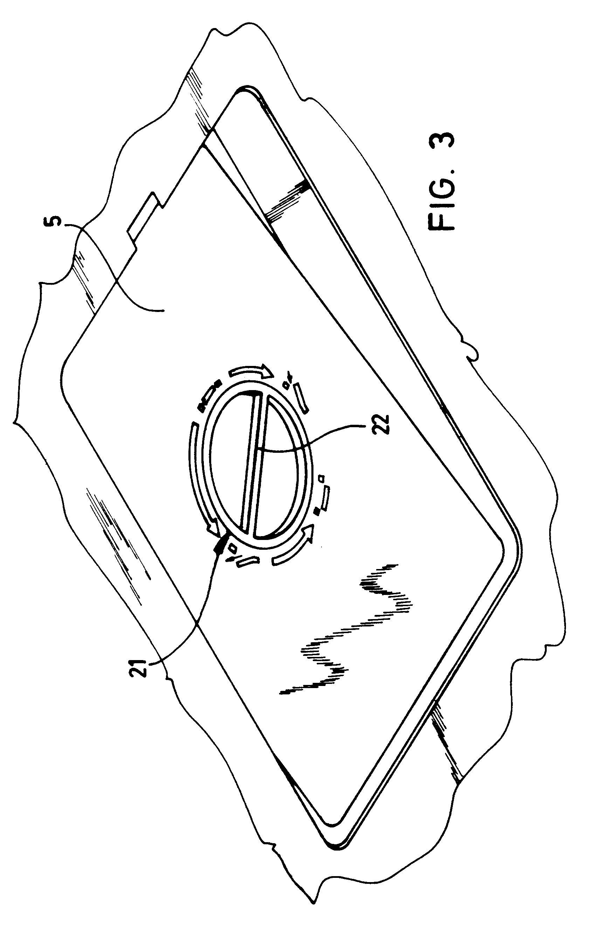

Aus Fig. 3 ist ein Drehbedienungselement 21 zu ersehen, welches drehfest mit dem zentralen Steuerorgan 16 bzw. der Steuerscheibe 17 verbunden ist. Dieses Drehbedienungselement 21 dient zur Handbetätigung des zentralen Steuerorgans 16, und mit Hilfe einer vollständigen Umdrehung des Drehbedienungselements 21 kann der Deckel 5 in alle gewünschten Ausstellstellungen gebracht werden. Mit Hilfe von Markierungen können die jeweiligen Ausstellstellungen des Deckels 5 symbolisch verdeutlicht werden, so daß man entsprechend der gewünschten Ausstellstellung die zweckmäßigste Drehrichtung bei dem Drehbedienungselement 21 sofort erkennen kann. Mit 22 ist ein Griffteil bezeichnet, das von einer Bedienungsperson zum Verdrehen des Drehbedienungselements 21 von Hand ergriffen werden kann.

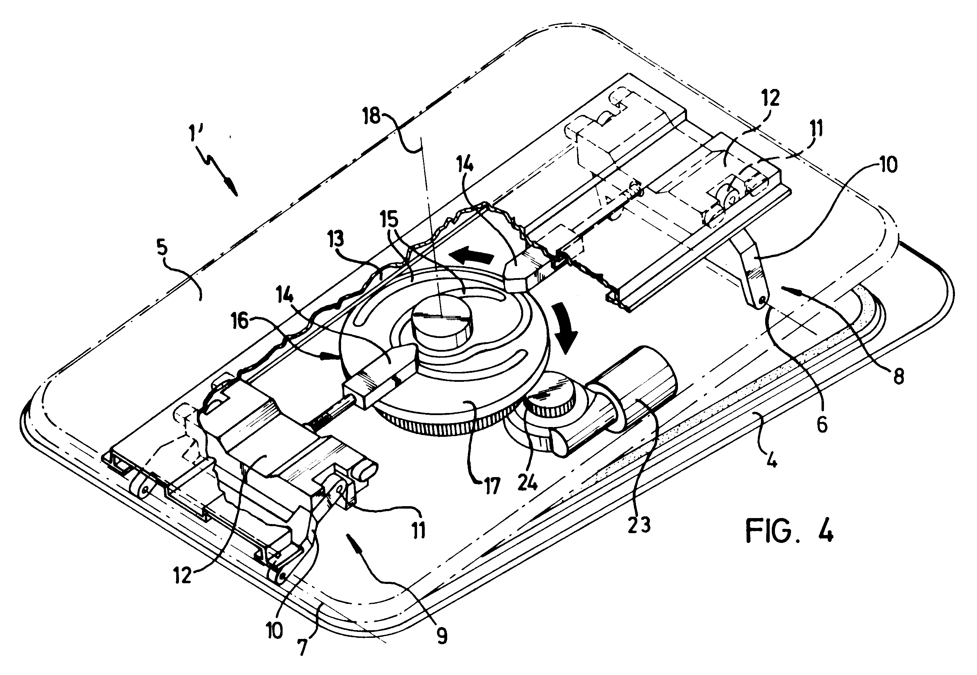

In Fig. 4 ist schließlich eine zweite bevorzugte Ausführungsform gezeigt. Gleiche oder ähnliche Teile wie bei der ersten bevorzugten Ausführungsform sind mit denselben Bezugszeichen versehen. Die Ausführungsform nach Fig. 4 ist insgesamt mit 1' zur Unterscheidung von den vorangehenden Figuren bezeichnet. Bei dieser Ausführungsform des Fahrzeugdachs 1' wird das zentrale Steuerorgan 16 von einem Elektromotor 23 angetrieben, der am Deckel 5 befestigt ist. Über eine Zahnradverbindung 24 wird das zentrale Steuerorgan 16 mit Hilfe des Elektromotors 23 verdreht. Dieser elektrische Antrieb kann beispielsweise vom Fahrer aus betätigt werden, so daß alle Deckel 5 auf dem Fahrzeugdach 1' in die jeweils gewünschten Stellungen zur Verbesserung des Bedienungskomforts gebracht werden können.

Anstelle des Elektromotors 23 können auch andere Motorantriebe eingesetzt werden.

### Bezugszeichen

- 1: Fahrzeugdach insgesamt in den Fig. 1 bis 3
- 1': Fahrzeugdach insgesamt in Fig. 4
- 2: Feste Dachfläche
- 3: Dachöffnung
- 4: Rahmen
- 5: Deckel
- 6: Achse
- 7: Achse
- 8: Schwenklagerung
- 9: Schwenklagerung
- 10: Ausstellhebel
- 11: Gelenk
- 12: Schieber
- 13: Schiene
- 14: Nachlaufglied
- 15: Steuernut
- 16: Zentrales Steuerorgan
- 17: Steuerschieber
- 18: Achse
- 19: Anschlag
- 20: Anschlag
- 21: Drehbedienungselement
- 22: Griffteil
- 23: Elektromotor
- 24: Zahnradverbindung

## Patentansprüche

1. Fahrzeugdach, insbesondere für Schwerkraftfahrzeuge, Busse o.dgl., mit einer in einer festen Dachfläche (2) vorgesehenen Dachöffnung (3), die mittels eines Deckels (5) verschließbar ist, der um zwei quer zur Fahrzeuglängsachse verlaufende Achsen (6,7) über eine Schwenklagerung (8,9) und eine einen Ausstellhebel (10) aufweisende Ausstelleinrichtung bezüglich eines in die Dachöffnung eingesetzten Rahmens (4) ausstellbar ist, und mit einer Betätigungseinrichtung zum Ausstellen des Deckels (5), dadurch **gekennzeichnet,** daß die Betätigungseinrichtung ein zentral am Deckel (5) angeordnetes, um seine Achse (18) drehbares Steuerorgan (16) für alle Ausstellstellungen des Deckels (5) aufweist, welches die Ausstelleinrichtung (10, 12, 14), die am Deckel (5) gelagert ist, beaufschlagt, und daß die Ausstellhebel (10) der Ausstelleinrichtung nur an ihren Enden mit dem Rahmen (4) verbunden sind.

2. Fahrzeugdach nach Anspruch 1, dadurch gekennzeichnet, daß jedem Ausstellhebel (10) der Ausstelleinrichtung ein an einer Schiene (13) am Deckel (5) gleitbeweglich geführter Schieber (12) zugeordnet ist, welcher den oder die Ausstellhebel (10) zum Bewegen in die jeweilige Ausstellstellung beaufschlagt.

3. Fahrzeugdach nach Anspruch 2, dadurch gekennzeichnet, daß jeder Ausstellhebel (10) mit dem jeweiligen Schieber (12) gelenkig verbunden ist.

4. Fahrzeugdach nach einem der Ansprüche 1 bis 3, dadurch gekennzeichnet, daß das zentrale Steuerorgan (16) von einer Steuerscheibe (17) gebildet wird, in der die Ausstellbewegungen des Deckels (5) bestimmende, kurvenförmig verlaufende Steuernuten (15) ausgebildet sind, in die je ein Nachlaufglied (14) eingreift, das starr mit dem dem jeweiligen Ausstellhebel (10) zugeordneten Schieber (12) bewegungsverbunden ist.

5. Fahrzeugdach nach Anspruch 4, dadurch gekennzeichnet, daß die jedem Ausstellhebel (10) zugeordnete Steuernut (15) komplementär zu der jeweils anderen ausgelegt ist und die Steuernuten (15) einen kreuzungsfreien Verlauf haben.

6. Fahrzeugdach nach Anspruch 4 oder 5, dadurch gekennzeichnet, daß der Steigungswinkel der Steuernuten (15) derart gewählt ist, daß die Ausstelleinrichtung (10, 12) selbsthemmend betreibbar ist.

7. Fahrzeugdach nach einem der vorangehenden Ansprüche, dadurch gekennzeichnet, daß mit dem Steuerorgan (16) ein Drehbedienungselement (21) verbunden ist, das von der Deckelinnenseite aus einhändig zur Einstellung der entsprechend gewünschten Deckelstellung verdrehbar ist.

8. Fahrzeugdach nach einem der Ansprüche 1 bis 6, dadurch gekennzeichnet, daß das Steuerorgan (16) mittels eines Motors (23) antreibbar ist.

9. Fahrzeugdach nach Anspruch 8, dadurch gekennzeichnet, daß der Antriebsmotor ein im Deckel (5) angeordneter Elektromotor (23) ist.

10. Fahrzeugdach nach einem der vorangehenden Ansprüche, dadurch gekennzeichnet, daß der Deckel (5) während einer vollständigen Umdrehung des Steuerorgans (16) in alle Ausstellstellungen bringbar ist.

11. Fahrzeugdach nach einem der Ansprüche 2 bis 10, dadurch gekennzeichnet, daß Anschläge (19, 20) vorgesehen sind, welche die Schieber (12) in den bevorzugten Stellungen des Deckels (5) arretieren.

12. Fahrzeugdach nach Anspruch 11, dadurch gekennzeichnet, daß die Schieber (12) mittels den Anschlägen (19, 20) in den jeweiligen Endstellungen der Ausstelleinrichtung (10, 12, 14) arretierbar sind.

## Claims

1. A vehicle roof, particularly for heavy motor vehicles, buses or the like, with a roof opening (3) provided in a fixed roof area (2) and which can be closed by a cover (5) which can be extended into an open position about two axes (6,7) extending crosswise to the longitudinal axis of the vehicle via a pivot mounting (8, 9) and an opening means comprising a push-out lever (10), the said opening function being relative to a frame (4) inserted into the roof opening, and with an actuating means for opening the cover (5), characterised in that the actuating means comprises, disposed centrally on the cover (5) and rotatable about its axis (18), a control member (16) for all the open positions of the cover (5) and which acts upon the opening means (10, 12, 14) mounted on the cover (5) and in that only the ends of the opening or extending lever (10) of the opening means are connected to the frame (4).

2. A vehicle roof according to Claim 1, characterised in that there is associated with each push-out lever (10) of the opening means a slider (12) guided for sliding movement on a rail (13) on the cover (5) and which acts upon the push-out lever or levers (10) for movement into whichever is the required open position.

3. A vehicle roof according to Claim 2, characterised in that each push-out lever (10) is articulatingly connected to the respective slider (12).

4. A vehicle roof according to one of Claims 1 to 3, characterised in that the central control member (16) consists of a control disc (17) in which curvilineally extending control slots (15) are constructed to determine the push-out movements of the cover (5) and which are in each case engaged by a follower member (14) which is rigidly and motionally connected to the slider (12) associated with the respective push-out lever (10).

5. A vehicle roof according to Claim 4, characterised in that the control groove (15) associated with each push-out lever (10) is designed complementary to the other, and the control grooves (15) extend in a pattern which has no intersections.

6. A vehicle roof according to Claim 4 or 5, characterised in that the pitch angle of the control grooves (15) is so chosen that the push-out means (10, 12) can be operated in a self-locking manner.

7. A vehicle roof according to one of the preceding Claims, characterised in that connected to the control means (16) is a rotationally operating element (21) which can be manually rotated from inside the cover in order to adjust the appropriately desired position of the cover.

8. A vehicle roof according to one of Claims 1 to 6, characterised in that the control means (16) can be driven by a motor (23).

9. A vehicle roof according to Claim 8, characterised in that the drive motor is an electric motor (23) disposed in the cover (5).

10. A vehicle roof according to one of the preceding Claims, characterised in that during a complete rotation of the control means (16), the cover (5) can be moved into any opened position.

11. A vehicle roof according to one of Claims 2 to 10, characterised in that abutments (19, 20) are provided which lock the sliding members (12) in the preferred positions of the cover (5).

12. A vehicle roof according to Claim 11, characterised in that the sliding members (12) can be locked in the respective extreme positions of the opening means (10, 12, 14) by means of the abutments (19, 20).

## Revendications

1. Toit de véhicule, notamment pour poids lourds, autobus ou analogues, comportant une ouverture (3) pratiquée dans la partie rigide du toit (2) et que peut obturer un couvercle (5) qui peut être soulevé par rapport à un cadre (4) encastré dans l'ouverture (3), en tournant autour de deux axes (6, 7) transversaux par rapport à l'axe longitudinal du véhicule, par l'intermédiaire de paliers articulés (8, 9) et d'un dispositif équipé d'un levier de soulèvement (10), le soulèvement du couvercle (5) étant assuré par un dispositif de manoeuvre, caractérisé en ce que le dispositif de manoeuvre comporte un organe de commande (16) situé au centre du couvercle (5), pouvant tourner autour de son axe (18), pour toutes les positions soulevées du couvercle (5), cet organe agissant sur le dispositif de soulèvement (10, 12, 14) monté sur le couvercle (5), les leviers de soulèvement (10) n'étant reliés que par leurs extrémités au cadre (4).

2. Toit de véhicule selon la revendication 1, caractérisé en ce qu'à chaque levier (10) du dispositif de soulèvement est associé un coulisseau (12) pouvant se déplacer le long d'un rail (13) fixé au couvercle (5) et agissant sur le ou les leviers de soulèvement (10) pour les amener en position de soulèvement.

3. Toit de véhicule selon la revendication 2, caractérisé en ce que chaque levier de soulèvement (10) est relié à son coulisseau (12) de façon articulée.

4. Toit de véhicule selon une des revendications 1 à 3, caractérisé en ce que l'organe central de commande (16) est constitué par un disque de commande (17) dans lequel sont réalisées des rainures de commande (15) selon des courbes définissant les mouvements de soulèvement du couvercle (5) et dans chacune desquelles se déplace une barre de poursuite (14) qui est rigidement liée au mouvement du coulisseau (12) associé au levier de soulèvement (10) correspondant.

5. Toit de véhicule selon la revendication 4, caractérisé en ce que la rainure de commande (15) associée à chaque levier de soulèvement (10) est complémentaire de l'autre rainure, les deux rainures (15) ne se croisant pas.

6. Toit de véhicule selon les revendications 4 ou 5, caractérisé en ce que l'angle des pentes des rainures de commande (15) sont choisies de manière que le dispositif de soulèvement (10, 12) est autostable dans son mouvement.

7. Toit de véhicule selon une des revendications précédentes, caractérisé en ce qu'à l'organe de commande (16) est associé un élément de déplacement rotatif (21) que l'on peut manoeuvrer depuis l'intérieur du véhicule, d'une seule main, pour régler la position souhaitée du couvercle.

8. Toit de véhicule selon une des revendications 1 à 6, caractérisé en ce que l'organe de commande (16) peut être entraîné par un moteur (23).

9. Toit de véhicule selon la revendication 8, caractérisé en ce que le moteur (23) est un moteur électrique (23) monté sur le couvercle (5).

10. Toit de véhicule selon une des revendications précédentes, caractérisé en ce que le couvercle (5) pendant une rotation complète de l'organe de commande (16), peut être amené dans toute position soulevée possible.

11. Toit de véhicule selon une des revendications 2 à 10, caractérisé en ce que des butées (19, 20) sont prévues pour arrêter le coulisseau (12) dans des positions préférentielles du couvercle (5).

12. Toit de véhicule selon la revendication 11, caractérisé en ce que le coulisseau (12) peut être arrêté par les butées (19, 20) dans chacune des positions extrêmes du dispositif de soulèvement (10, 12, 14).
